Europäisches Patentamt

European Patent Office

Office européen des brevets

(11) Veröffentlichungsnummer: **0 182 309**
**B1**

(12) **EUROPÄISCHE PATENTSCHRIFT**

(45) Veröffentlichungstag der Patentschrift:
19.07.89

(51) Int. Cl.⁴: **C 10 G   1/00**

(21) Anmeldenummer: 85114535.9

(22) Anmeldetag: 15.11.85

(54) **Verfahren zur hydrierenden Aufarbeitung von Kohlenstoff enthaltenden Abfällen synthetischen bzw. überwiegend synthetischen Ursprungs.**

(30) Priorität: 22.11.84 DE 3442506

(43) Veröffentlichungstag der Anmeldung:
28.05.86 Patentblatt 86/22

(45) Bekanntmachung des Hinweises auf die Patenterteilung: 19.07.89 Patentblatt 89/29

(84) Benannte Vertragsstaaten:
AT BE CH DE FR GB IT LI LU NL SE

(56) Entgegenhaltungen:
DE–A– 2 211 295
DE–A– 2 930 032
GB–A– 2 089 831
US–A– 3 704 108
US–A– 4 251 500

(73) Patentinhaber: Union Rheinische Braunkohlen Kraftstoff Aktiengesellschaft
Ludwigshafener Strasse o. Nr. Postfach 8
D-5047 Wesseling (DE)

(72) Erfinder: Giehr, Axel, Dr.
Zeisigweg 1
D-5047 Wesseling (DE)
Erfinder: Höver, Hermann, Dr.
Strombergstrasse 17
D-5303 Bornheim-Hemmerich (DE)
Erfinder: Keim, Karl-Heinz, Dipl.-Ing.
Höhenring 31
D-5357 Heimerzheim (DE)
Erfinder: Korff, Joachim, Dr.
Kapellenstrasse 28
D-5303 Bornheim-Merten (DE)
Erfinder: Neuwirth, Otto, Dr.
Am Eichholzer Acker 39
D-5047 Wesseling (DE)

EP 0 182 309 B1

**Beschreibung**

Die vorliegende Erfindung betrifft ein Verfahren zur Aufarbeitung von Kohlenstoff enthaltenden Abfällen durch Hydrieren derselben bei erhöhter Temperatur und einem Wasserstoffdruck von wenigstens 1 bar.

Es ist in der Öffentlichkeit und in der Fachwelt bekannt, daß der weltweit anfallende Abfall eine zunehmend größere Belastung der Umwelt darstellt. Seit Jahrzehnten wird bis heute Abfall in Deponien, z. B. in verlassenen Kiesgruben, Bergwerksgruben und an anderen Stellen gelagert. Lange Zeit hat man hierbei die chemische Struktur des Abfalls und seine langfristige Einwirkung auf Boden und Grundwasser nicht beachtet. In jüngerer Zeit werden bestimmte Abfälle in sog. Sonderdeponien gelagert. Hierbei bemüht man sich, die Deponie gegenüber Grundwasser und Boden abzudichten. Langfristig sind jedoch auch hier Gefahren für die Umwelt zu befürchten.

Die Fachwelt hat sich daher seit einiger Zeit intensiv um eine Aufarbeitung bzw. Verarbeitung des Abfalls bemüht, einmal zur Schonung der Umwelt und zum anderen um verwertbare Produkte aus dem Abfall zu gewinnen.

So wird in « The Oil and Gas Journal », Dec. 25, 1978, S. 80, eine Pilotanlage beschrieben, in der durch Pyrolyse Kunststoffe in Gase und Öle umgewandelt werden können.

In « Hydrocarbon Processing », April 1979, S. 183, wird eine Verbrennungsanlage insbesondere für spezielle Abfälle beschrieben.

Auch der biochemische Abbau von Kunststoffen wurde untersucht (s. z. B. « European Chemical News », Sept. 10, 1979, S. 28). In « Chemical Engineering », 13. August 1979, S. 41, wird ein Verfahren beschrieben, nach dem gefährliche Abfälle in erhärtende Materialien, z. B. Zement, eingegossen werden. Ein Überblick über die wichtigsten Verfahren ist in « Chemical and Engineering News », 01. Okt. 1979, S. 34, dargestellt. Hier wird insbesondere die Vergasung von Biomasse, nämlich Holzabfällen und dergl. zu Kohlenmonoxid und Wasserstoff beschrieben. Auf S. 36, linke Spalte dieser Schrift wird auch ein Versuchsprogramm zur Umsetzung von zerkleinertem Holz in Wasser suspendiert, mit Wasserstoff in Gegenwart von Raney-Nickel, als Katalysator beschrieben.

In « Europa Chemie », 25, 1979, S. 417, wird ein Verfahren beschrieben, nach dem unsortierte Kunststoffabfälle plastifiziert und verpresst werden. Die Wirbelschichtverbrennung von Abfällen wird in « Chemische Industrie », XXXII, April 1980, S. 248, beschrieben. Die Umwandlung von Abfällen und Biomasse durch Erhitzen mit Wasser und Alkalien wird in « Chemistry International », 1980, No. 4, S. 20, beschrieben. Zahlreiche andere Publikationen sind darüber hinaus bekannt geworden.

So wird in DE-A-2 211 295 ein Verfahren offenbart, gemäß dem man zellulosehaltige Materialien in Gegenwart von Katalysatoren wie Fe, Co, Ni, Cu, Ru, Rh, Pd, Ir, Os und Pt mit Wasserstoff in organische Brennöle umwandeln kann.

Auch gemäß GB-A-2 089 831 kann man zellulosehaltige Materialien in Gegenwart eines Nickelkatalysators mit Wasserstoff in ein Heizöl umwandeln, wobei jedoch, wie aus der später publizierten Schrift « Chemical Engineering », 19. Januar 1987, Seiten 64 und 65 hervorgeht, Plastikmaterialien vorher entfernt werden müssen und verbrannt werden.

In US-A-4 251 500 wird die hydrierende Spaltung von Schwefel enthaltendem Gummi, insbesondere von Altreifen einschließlich des Reifenkords in Gegenwart eines speziellen aus Eisenhydroxid, $MoO_3$ und $Cr_2O_3$ bestehenden Katalysators beschrieben, der eine synergistische Wirkung mit dem Schwefel des Gummivulkanisats entfaltet. Die hydrierende Spaltung von Altreifen in Gegenwart eines Kobaltmolybdat-Katalysators wird auch in US-A-3 704 108 und « RUBBER AGE », 1974, 106, Vol. 6, Seite 27-38 beschrieben, wobei jedoch die Reifenkordmaterialien abgetrennt werden müssen (Seite 32, rechte Spalte, 2. Absatz und S. 29, linke Spalte, 2. Absatz von « RUBBER AGE »).

In jüngster Zeit wurden vor allem die Verbrennung in modernsten Anlagen weiter entwickelt und Großanlagen errichtet, die nach diesem Verfahren arbeiten. Obgleich Entstaubung und Rauchgaswäsche in solche Anlagen integriert sind, ist die Umsetzung der Abfälle zu $CO_2$ (und Wasser) ein unvermeidliches Begleitproblem.

Besonders im Hinblick auf die Anreicherung des $CO_2$ in der Atmosphäre, ist die $CO_2$-Erzeugung unerwünscht. Ferner entweichen Schadstoffe auch bei sorgfältiger Reinigung, so z. B. Schwermetalle, $SO_2$, $NO_x$ u.a., in kleinen Anteilen in die Atmosphäre.

Auch die Pyrolyse wird inzwischen in technischem Umfang betrieben (s. beispielsweise « Vereinigte Wirtschaftsdienste GmbH », 04. Okt. 1985, S. 9). Die Pyrolyse hat jedoch die Nachteile der überwiegenden Bildung gasförmiger Produkte und eines stark verschmutzten Koksrückstandes.

Das Problem der Abfall- und Biomasse-Verarbeitung ist daher nach wie vor nicht zufriedenstellend gelöst.

Eine überraschende, im Vergleich zum Stand der Technik wesentlich günstigere Lösung dieses Problems, insbesondere im Hinblick auf die Gewinnung sehr hoher Anteile wertvoller Produkte, wird in der vorliegenden Erfindung offenbart, die ein Verfahren betrifft, zur hydrierenden Aufarbeitung von Kohlenstoff enthaltenden Abfällen, wobei ein Verfahren zum hydrierenden Kracken von Abfallreifengummi in Gegenwart eines mit Schwefel synergistisch wirkenden pulverförmigen Katalysators ausgenommen ist, der aus einer Eisenverbindung und einem Zusatz von Metallen aus der Gruppe Cr, Mo, W, Se und Te besteht, durch Umsetzung mit Wasserstoff und/oder Wasserstoff enthaltenden Gasen und/oder Wasser-

2

stoff übertragenden Verbindungen (Wasserstoff-Donor-Lösungsmittel), dadurch gekennzeichnet, daß Gemische Kohlenstoff enthaltender Abfälle synthetischen bzw. überwiegend synthetischen Ursprungs mit Wasserstoff und/oder Wasserstoff enthaltenden Gasen bei einer Temperatur von 200-600 °C, bevorzugt bei einer Temperatur von 200-540 °C, bei einem Druck von 30-500 bar, bevorzugt von 50-450 bar und einer Verweilzeit von 1 Minute bis 8 Stunden, bevorzugt von 15 Minuten bis 6 Stunden umgesetzt werden und bei Einsatz eines Wasserstoff-Donor-Lösungsmittels bei einer Temperatur von 75-500 °C, bevorzugt von 80-480 °C und einem Druck von 1-300 bar hydrierend umgesetzt werden.

Der hydrierenden Aufarbeitung der Kohlenstoff enthaltenden Abfälle kann eine Stufe vorgeschaltet sein, in der mit oder ohne Wasserstoff-Donor-Lösungsmittel in Gegenwart protischer Lösungsmittel, insbesondere von Wasser umgesetzt wird, bei einem Druck von 1-150 bar und einer Temperatur von 75-500 °C und in einer 2. Stufe bei einer Temperatur von 200-600 °C, bevorzugt von 200-540 °C und bei einem Druck von 30-500 bar, bevorzugt von 50-450 bar.

Das erfindungsgemäße Verfahren ermöglicht es, Abfälle synthetischen Ursprungs, aus denen anorganische Bestandteile, wie Glas, Metalle, Steinmaterialien und dergleichen entfernt sind, ohne weitere Sortierung zu wertvollen Kohlenwasserstoffen zu verarbeiten, also zu $C_1$-$C_4$-Kohlenwasserstoffgasen, zu im Benzinbereich siedenden Kohlenwasserstoffen und zu Mittel- und Schwerölen, die als Dieselöl und zu Heizungszwecken verwendet werden können. Erfindungsgemäß sind vorsortierte Materialien insbesondere in der Weise verarbeitbar, daß kohlenstoffhaltige Abfälle synthetischen Ursprungs, wie beispielsweise Kunststoffe bzw. Kunststoffgemische, Gummi, Reifen, Textilabfälle von dem vegetabilischen Anteil oder Biomasse-Anteil zumindest grob abgetrennt werden und dann einer hydrierenden Behandlung unterworfen werden können, ggfs. gemeinsam mit Industrieabfällen, wie z. B. Lack- und Farbresten und organischen Chemikalien, Industrieproduktionsabfällen, organisch-synthetischen Shredderabfällen der Autoindustrie, Klärschlamm oder mit Altölen u. dergl. Hierbei können teilweise andere Abfälle wie Papier, Lebensmittelreste, land- und forstwirtschaftliche Abfälle, Holz, Pflanzen und dergleichen, weitgehend abgetrennt werden, jedoch auch in gewissem Umfang im synthetischen Anteil verbleiben. Hausmüll kann demgemäß beispielsweise in der Weise aufgearbeitet werden, daß man die Kunststoffe, Gummi, Textilreste und dergleichen zumindest grob abtrennt und gesondert der hydrierenden Behandlung unterwirft oder z. B. gemeinsam mit Altreifen und/oder Kunststoff und/oder Chemieabfällen aus der Industrie und/oder Altölen u. dergl. Auch die synthetischen Einzelkomponenten sind unter den erfindungsgemäßen Bedingungen sehr gut zu wertvollen flüssigen Produkten verarbeitbar. Das erfindungsgemäße Verfahren ist auch sehr gut geeignet für die gemeinsame hydrierende Behandlung der genannten Abfälle bzw. Abfallgemische mit Kohle, Kohlebestandteilen, wie beispielsweise Kohleölrückständen, Kohleölen, Pyrolyseölen, Erdöl, Erdölrückständen, sonstigen Erdölbestandteilen, Ölschiefer, Ölschieferbestandteilen, Ölsanden, Bitumen und ähnlichen bzw. den Gemischen dieser Materialien. Die Abtrennung der oben genannten anorganischen Materialien von den kohlenstoffhaltigen Materialien kann gemäß dem Stand der Technik durchgeführt werden. Diese anorganischen Materialien können, sofern sie nicht wieder aufgearbeitet werden, deponiert werden. Auch die Zerkleinerung und Trennung von Abfallmaterialien und Biomasse kann gemäß dem Stand der Technik durchgeführt werden. Soweit apparative Bedingungen dem nicht entgegenstehen, kann das erfindungsgemäße Verfahren auch in Gegenwart anorganischer Materialien durchgeführt werden.

Bestandteile in den Abfällen, die nicht in Kohlenwasserstoffe umwandelbar sind, wie z. B. Schwefel, Stickstoff, Sauerstoff und Halogene in Form ihrer Verbindungen, fallen am Hydrierreaktorausgang als Wasserstoffverbindungen gasförmig an, also als $H_2S$, $NH_3$, $HCl$, $H_2O$ u.a.

Es ist Stand der Technik, diese Verbindungen durch Gaswäschen abzutrennen und ggfs. einer Weiterverarbeitung zuzuführen. Auch die Bildung gefährlicher bei der Verbrennung entstehender Stoffe, wie z. B. von $NO_x$, $SO_2$ oder von Dioxinen wird gemäß vorliegendem Verfahren vermieden. Ebenso können schwer verbrennbare Kunststoffe wie Polyvinylchlorid risikolos aufgearbeitet werden.

Die Hydrierung der kohlenstoffhaltigen Abfälle kann ohne Katalysatoren mit sehr guten Ergebnissen durchgeführt werden. Teilweise noch bessere Ergebnisse bezüglich Umsatz und Selektivität von Fraktionen bestimmter Siedebereiche können in Gegenwart von Katalysatoren erhalten werden, wie beispielsweise in Gegenwart von Fe, Mo, Ni, Co, W und anderen hydrieraktiven Metallen und/oder ihren Verbindungen, wobei diese aus einzelnen oder aus wenigstens zweien dieser Komponenten bestehen können und die Metalle und/oder deren Verbindungen auf Trägern sein können, z. B. auf Aluminiumoxid, Siliziumoxid, Aluminiumsilikaten, Zeolithen und anderen dem Fachmann bekannten Trägern oder von Trägergemischen oder auch ohne Träger. Auch bestimmte Zeolithe als solche sind geeignet. Weitere geeignete Katalysatoren können sog. Wegwerf-Katalysatoren sein, wie beispielsweise Herdofenkoks, Winklervergasungsstäube, Stäube und Aschen, die bei der hydrierenden Vergasung von Kohle zu Methan anfallen (HKV-Stäube), Russe wie z. B. Ölvergasungsrusse aber auch Eisenoxide enthaltende Gemische, wie beispielsweise Rotschlamm, Bayermasse, Luxmasse, Stäube aus der Eisenindustrie und andere, wobei diese Materialien auch mit hydrieraktiven Metallen und/oder Metallverbindungen dotiert sein können, insbesondere mit Schwermetallsalzen, wie z. B. Eisensalzen oder Salzen des Chroms, Zinks, Molybdäns, Wolframs, Mangans, Nickels, Kobalts, ferner auch mit Alkali, Erdalkali, u. a. sowie mit Gemischen dieser Verbindungen. Die Katalysatoren können zumindest zum Teil sulfidierend vorbehandelt sein.

Die hydrierende Behandlung mit und ohne Katalysatoren von Gemischen synthetischer Abfälle wie Kunststoffen, Kunststoffgemischen, Gummi, Reifen, Textilabfällen, Industrieabfällen und dergl. sowie deren Gemischen, wobei in Gegenwart von Anreibölen gearbeitet werden kann sowie in Gemischen mit Kohle, Kohlebestandteilen, Erdöl, Erdölrückständen, sonstigen Erdölbestandteilen, Ölschiefer, Ölschieferbestandteilen, Ölsanden und deren Bestandteilen, Bitumen und ähnlichen Materialien, gearbeitet werden kann, findet bei einem Druck von 30-500 bar, bevorzugt von 50-450 bar statt. Die Temperatur liegt bei 200-600 °C, bevorzugt bei 200-540 °C, die Verweilzeit bei 1 Minute bis 8 Stunden, bevorzugt bei 15 Minuten bis 6 Stunden.

Als Hydriergas können verschiedene Wasserstoffqualitäten eingesetzt werden, auch mit Beimengen wie z. B. CO, $CO_2$, $H_2S$, Methan, Ethan, Wasserdampf, u.a. Sehr gut geeignet sind Wasserstoffqualitäten, wie sie bei Vergasungsreaktionen kohlenstoffenthaltender Materialien mit Wasserdampf entstehen. Solche Materialien können Rückstände aus der Verarbeitung mineralischer Öle sein oder von Kohle, Holz, Torf oder Rückständen aus der Kohleverarbeitung, beispielsweise Hydrierung. Geeignet sind auch Biomassen oder die aus Hausmüll abgetrennten vegetabilischen Anteile. Sehr gut geeignet sind selbstverständlich auch reine $H_2$-Qualitäten, wie beispielsweise Elektrolysewasserstoff. So kann erfindungsgemäß beispielsweise Hausmüll zunächst in einen vegetabilischen und synthetischen Anteil getrennt werden und anschließend der vegetabilische Anteil zur Wasserstofferzeugung einer Vergasung zugeführt werden, während der synthetische Anteil der hydrierenden Behandlung unterworfen wird.

Der vegetabilische Anteil kann auch einer Vergärung oder einer anderen Fermentierung zugeführt werden.

Das im allgemeinen von anorganischen Materialien weitgehend befreite, gegebenenfalls getrocknete, zerkleinerte oder geschmolzene oder mit Anreiböl oder anderen Zusätzen gemischte Einsatzprodukt wird als solches oder mit Katalysator gemischt, auf Reaktionstemperatur gebracht und in der Reaktionszone mit Hydriergas behandelt. In den Fällen, in denen bei erhöhter Temperatur bereits im Mischbehälter ein pumpbarer Brei entsteht, kann das Einsatzprodukt in die Hydrierung gepumpt werden. Zur Erzeugung des pumpbaren Breis kann ein sog. Anreiböl, das im Prozeß anfällt und aus verschiedenen Quellen in der Anlage stammen kann, zugegeben werden. Anreiböl kann jedoch auch ein nicht aus der Anlage stammendes Fremdöl sein. Schließlich kann auch Wasser oder Dampf zugeführt werden. Auch durch den Zusatz beispielsweise von Erdölkomponeneten, Bitumen oder Kohlebestandteilen kann ein pumpbarer Brei entstehen. Das Einsatzprodukt kann jedoch auch beispielsweise mit Hilfe von Förderschnecken u.a. dem Stand der Technik entsprechenden Fördervorrichtungen in den Hydrierreaktor gefördert werden.

Die Reaktionszone kann aus einem oder mehreren hintereinander oder parallel geschalteten Reaktoren bestehen. Nachgeschaltet hinter den (die) Reaktor(en) befindet sich ggfs. im allgemeinen wenigstens ein Heißabscheider, wie er aus der Sumpfphasehydrierung bekannt ist, in dem eine Trennung bei der Heißabscheidertemperatur in gasförmige Bestandteile, die abgezogen werden und in den Heißabscheidersumpf, stattfindet.

Die gasförmigen Anteile werden gekühlt, wobei flüssige Kohlenwasserstoffe anfallen, die dem Stand der Technik entsprechend weiterverarbeitet werden, wie beispielsweise durch weitere hydrierende Spaltstufen bzw. Raffinationsstufen und destillative Trennung. Teilweise können diese jedoch auch rückgeführt werden zum Anreiben des Einsatzproduktes. Die nicht kondensierten Gase werden durch Gaswäsche von $H_2S$, $NH_3$, HCl, gegebenenfalls auch CO und $CO_2$ befreit.

Der Wasserstoff im anfallenden Gas kann als Hydriergas zu dem (den) Hydrierreaktor(en) rückgeführt werden. Eine Verarbeitung der in den gasförmigen Produkten enthaltenen niederen Kohlenwasserstoffe etwa durch Dampfreformieren ist ebenfalls möglich, wobei zusätzlich Wasserstoff gewonnen wird.

Die Produkte aus der Gasphase des Heißabscheiders, insbesondere die bei Normalbedingungen flüssigen Produkte können wie oben bereits ausgeführt, einer Raffinationsstufe zugeführt werden, die im allgemeinen hydrierend arbeitet. Hierbei können noch vorhandene geringe Anteile an Heteroatome enthaltenden Verbindungen vollständig hydrierend aufgearbeitet werden, so daß anschließend die Produkte praktisch schwefel-, stickstoff- und halogenfrei sind. Höher siedende Anteile können wenigstens einer Krackanlage zugeführt werden, insbesondere einer Hydrokrackanlage. Aus der Verarbeitung können im Bedarfsfall auch bestimmte Anteile wieder in die Abfallhydrierung bzw. vor die Abfallhydrierung rückgeführt werden.

Heißabscheidersumpf kann auf verschiedene Weise aufgearbeitet werden, z. B. durch Vakuumdestillation, wobei der Sumpf der Vakuumdestillation einer Vergasung zu $H_2$ und CO zugeführt werden kann. Die bei der Vergasung entstehenden Gase werden in diesem Falle vorteilhaft in die oben beschriebene Gaswäsche und Gasverarbeitung integriert. Der Vakuumdestillationsrückstand kann jedoch auch verkokt werden oder entasphaltiert werden oder nach anderen Verfahren des Standes der Technik weiterverarbeitet werden. Die anfallenden Rückstände und Aschen enthalten die metallischen Verunreinigungen, die entsprechend dem Stand der Technik deponiert werden können, sie können aber auch einer Wiedergewinnung der Metalle der metallurgischen Industrie zugeführt werden oder gegebenenfalls als Katalysatoren in der Abfallhydrierung eingesetzt werden. Der Heißabscheidersumpf bzw. -rückstand kann jedoch auch einer überkritischen Extraktion unterzogen werden, wie z. B. mit Propan, Butan oder höher siedenden Kohlenwasserstoffen, die aus dem Verfahren selbst entnommen werden können. Hierbei kann das Extraktionsmittel zumindest teilweise bereits in die Hydrierreaktoren selbst eingeführt werden, um den gewünschten Extraktionsgrad zu erzielen. Heißabscheidersumpf kann auch als Anreiböl eingesetzt werden, ebenso der Vakuumdestillationsrückstand, insbesondere nach Entasphaltierung.

In Figur 1 ist beispielhaft das erfindungsgemäße Verfahren mit beispielhaften Folgeschritten dargestellt.

In Figur 2 ist ein Beispiel des erfindungsgemäßen Verfahrens mit einer vorgeschalteten Lösungsmittelbehandlung dargestellt.

In Figur 3 ist die Kombination einer Altölraffination mit dem erfindungsgemäßen Verfahren dargestellt.

In Figur 4 ist die Abhängigkeit der Ausbeuten an den einzelnen Fraktionen in Abhängigkeit von der Temperatur dargestellt.

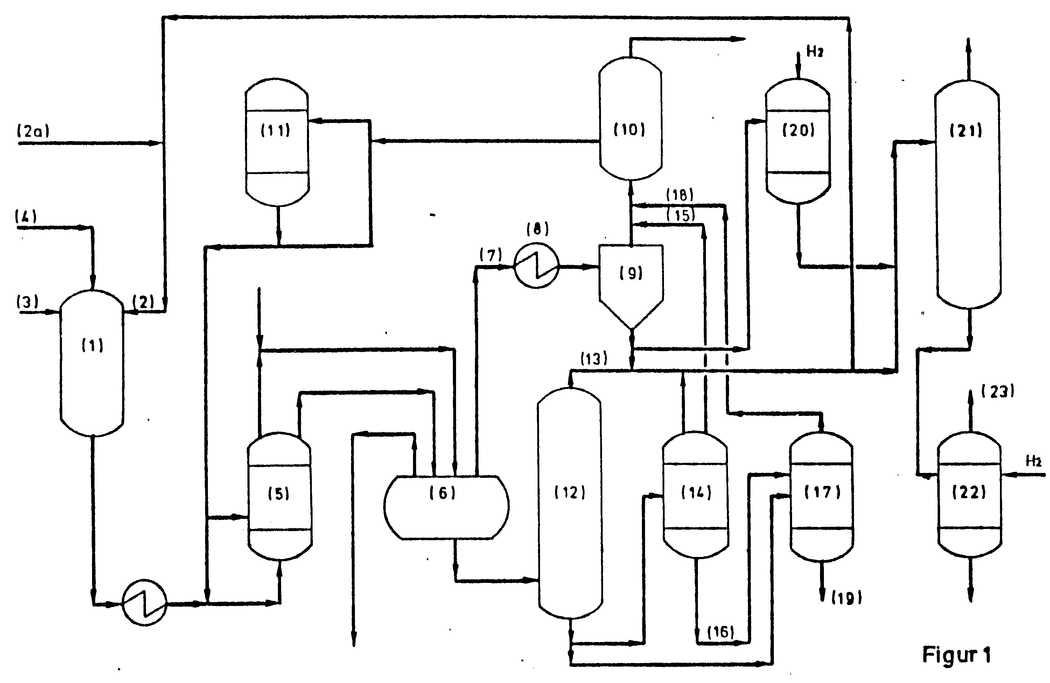

Figur 1 soll im folgenden im einzelnen erläutert werden :

Die Abfallstoffe gelangen in Mischapparatur (1) nach Zerkleinern, wobei falls erforderlich, im Anschluß an (1) oder vor (1) eine zusätzliche Mahlung des Einsatzgutes stattfinden kann. Zusätzlich kann ein Anmaisch (-reib)öl das aus den gewonnenen Flüssigprodukten entnommen wird (2) oder ein Fremdöl (2a), Behälter (1) zugeführt werden. Ferner kann in Behälter (1) Katalysator (3) zugesetzt werden. Unter Zuführung von Wasserstoff (4) bzw. Wasserstoff enthaltendem Gas wird das Einsatzgut in Reaktor (5) hydriert.

Anstelle von Reaktoren (5) können auch mehrere Reaktoren eingesetzt werden. Aus (5) gelangt das hydrierte Produkt in Heißabscheider (6). Hier erfolgt eine Trennung in bei Heißabscheidertemperatur gasförmige Produkte (7), die über Wärmetauscher (8) in Abscheider (9) gelangen. In (9) werden die nach Kühlung flüssigen Produkte abgezogen, während über Kopf die gasförmigen Produkte entweichen.

Die Flüssigprodukte werden in üblicher Weise aufgearbeitet, wie z. B. durch Destillation oder gegebenenfalls hydrierende Spaltung des schwereren Ölanteils bzw. durch Raffination.

Die Gase werden in (10) von Beimengen an $H_2S$, $NH_3$, $HCl$, $CO_2$ u.a. befreit. Wasserstoff wird im Kreislauf geführt und gelangt wieder vor bzw. in den Hydrierreaktor. Gasförmige Kohlenwasserstoffe können ebenfalls abgetrennt werden und ein Teil oder ggfs. die gesamten Kohlenwasserstoffe durch Dampfreformieren (11) in $H_2$ und CO ungewandelt werden.

Aus dem Heißabscheidersumpf wird das flüssige Produkt abgezogen und beispielhaft einer Vakuumdestillation (12) zugeführt. Dort werden weitere Öle (13) gewonnen, die ebenfalls als Anreiböl verwendet werden können.

Der Sumpf der Vakuumdestillation kann beispielsweise in (14) verkokt werden. Auch die aus der Verkokung über Kopf abgezogenen Produkte (15) gelangen in die Gas- und Flüssigproduktaufarbeitung der Anlage. Der anfallende Koks (16), der auch die Aschebestandteile einschließlich Metallen enthält, kann in eine Vergasung (17) gelangen oder kann dem Stand der Technik entsprechend deponiert werden oder teilweise als Katalysator eingesetzt werden, in Abhängigkeit von der Zusammensetzung.

Alternativ kann der Vakuumdestillationssumpf direkt in (17) vergast werden. Die anfallenden Gase (18) gelangen in die Gasaufarbeitung der Anlage, während die anfallende Asche (19) bzw. der Ruß deponiert oder verbrannt werden können oder einer Weiterverarbeitung, z. B. der metallurgischen Industrie zugeführt werden können oder teilweise als Katalysatoren eingesetzt werden können, in Abhängigkeit von der Zusammensetzung.

Als weitere Alternative kann der Heißabscheiderinhalt mit einem überkritischen Gas extrahiert werden. Hierzu eignen sich beispielsweise Propan, Butan, Naphthaschnitte, aber auch Kohlenwasserstoffschnitte mit höherem Siedeende. Der Extrakt wird in üblicher Weise weiterverarbeitet. Der verbleibende Rückstand kann wie der Heißabscheidersumpf bzw. -rückstand weiterverarbeitet werden. Das Extraktionsmittel kann insbesondere bei mehreren hintereinander geschalteten Hydrierreaktoren bereits zumindest teilweise in die Reaktoren selbst eingeführt werden.

Im Falle von Einsatzprodukten mit relativ hohem Gehalt an Heteroatomen wie Schwefel, Stickstoff oder Halogenen, kann das flüssige Produkt aus Abscheider (9) zunächst einer Raffination (20) unterworfen werden, im allgemeinen einer hydrierenden Raffination. Das raffinierte Produkt gelangt in eine Destillation (21), jedoch auch die Destillate können einer Raffination unterworfen werden. Der Sumpf der Destillation kann in einer Krackstufe (22) zu niedriger siedenden Produkten (23) gespalten werden.

Die durch Figur 1 dargestellte Verarbeitung ist beispielhaft und schränkt die erfindungsgemäße hydrierende Verarbeitung von Abfall nicht ein, da der Stand der Technik für Produkte aus Hydrierreaktoren eine Vielzahl von Varianten umfaßt.

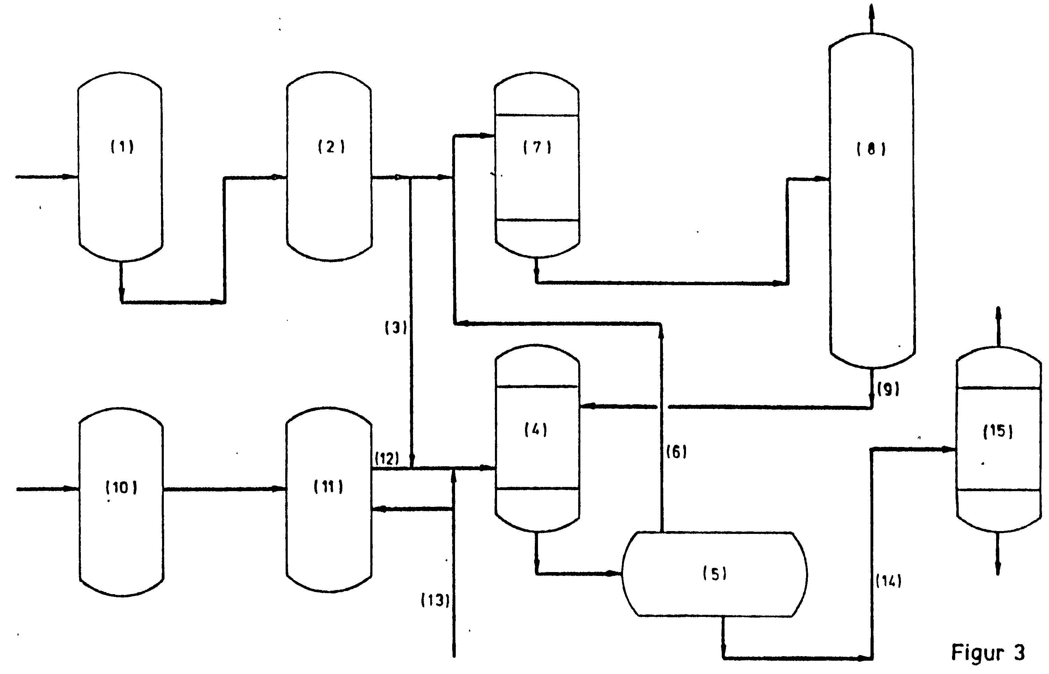

In die hydrierende Behandlung von Abfällen können auch Altöle bzw. Rückstände aus der Altölverarbeitung eingesetzt werden, wie in Figur 3 beispielhaft dargestellt ist. Altöl kann beispielsweise aus einem Lagertank (1) in eine physikalische und/oder chemische Trenn- bzw. Reinigungsanlage (2) eingesetzt werden, um feste Stoffe, Wasser und dergl. abzutrennen. Das so vorgereinigte Produkt kann über (3) in den Hydrierreaktor (4) oder in die Raffination (7) eingesetzt werden.

Gasförmige bzw. flüssige Produkte aus dem Heißabscheider (5) der Hydrierung können über (6) der Altölraffination (7) zugesetzt werden. Der Sumpf aus der Destillation (8) des raffinierten Altöls kann über (9) ebenfalls in (4) eingesetzt werden.

Zu hydrierende Abfälle werden aus Lager (10) entnommen und gelangen zunächst in einen Zerkleinerungs- und Mischbehälter (11), aus dem Einsatzprodukt über (12) in (4) eingesetzt wird. Über (13) können beispielsweise zusätzlich schwere mineralische oder kohlestämmige Öle zugesetzt werden. Heißabscheidersumpf bzw. -rückstand kann beispielsweise über (14) in eine Vergasung (15) eingesetzt werden.

Erfindungsgemäß kann auch eine Lösungsmittelbehandlung mit geeigneten Lösungsmitteln, insbesondere Wasserstoff übertragenden Lösungsmitteln oder Destraktions-Lösungsmitteln der hydrierenden Behandlung vorgeschaltet werden, anschließend kann entweder das gesamte aus Gelöstem und Ungelöstem bestehende Gemisch dem Hydrierreaktor zugeführt werden oder es findet hinter der Löseapparatur eine Trennung in Gelöstes und Ungelöstes statt und Lösung oder Ungelöstes werden dem (den) Hydrierreaktor(en) zugeführt. Durch nachgeschaltete Destillation kann in üblicher Weise das Lösungsmittel rückgeführt werden. Der abgetrennte, ungelöste Feststoff kann auch einer Vergasung oder Verkokung zugeführt werden.

Auch in dieser erfindungsgemäßen Verfahrensvariante kann das Einsatzprodukt im Gemisch mit Kohle und/oder Kohlebestandteilen und/oder Erdölrückständen und/oder Erdöl u. a., hydriert werden.

Auch für diese erfindungsgemäße Aufarbeitung von Abfällen sind zahlreiche apparative Varianten möglich, wie sie dem Stand der Technik entsprechen.

Geeignete Lösungsmittel sind z. B. Tetralin, Anthracenöl, Isopropanol, Kresol enthaltende Öle, Decalin, Naphthalin, Tetrahydrofuran, Dioxan, jedoch auch beispielsweise erdölstämmige, kohlestämmige oder aus der Anlage selbst stammende Kohlenwasserstoffe und Öle und Sauerstoff enthaltende Kohlenwasserstoffe und Öle. Schließlich kann auch Wasser und Dampf zugefügt werden.

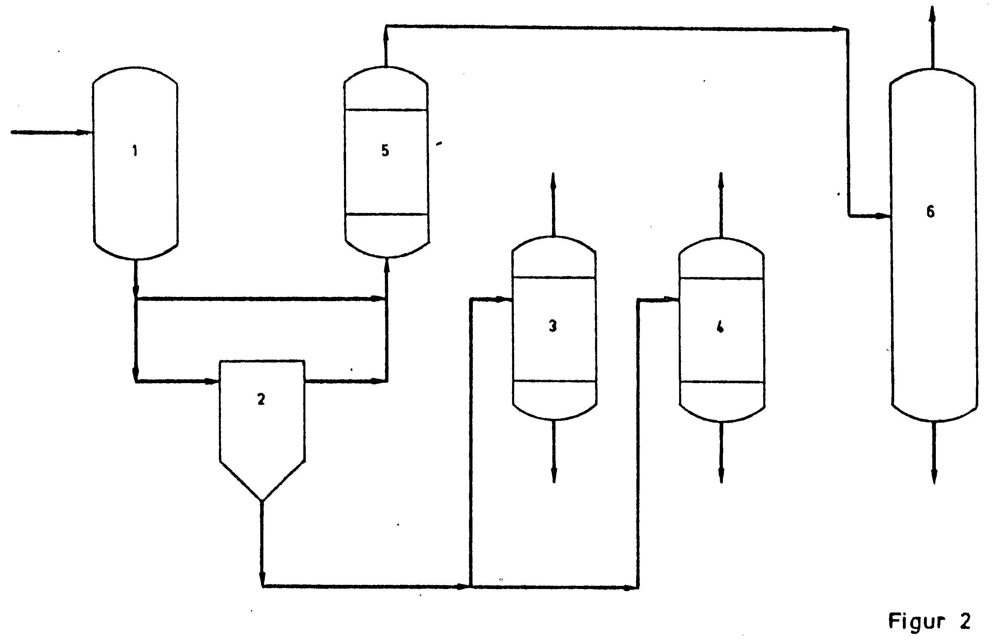

Die erfindungsgemäße Anwendung von Lösungsmitteln wird beispielhaft in Figur 2 näher erläutert:

In Behälter (1) wird das zerkleinerte Gut bei erhöhter Temperatur zumindest teilweise gelöst bzw. suspendiert. In Vorrichtung (2) kann eine Abtrennung von Ungelöstem stattfinden, das zur weiteren Verarbeitung bespielsweise in eine Verkokung (3) oder Vergasung (4) gelangt. Die Lösung oder Suspension wird nun in dem (den) Hydrierreaktor(en) (5) hydriert. Vorzugsweise werden Wasserstoff übertragende Lösungsmittel wie z. B. Tetralin, Dekalin, Anthracenöl, Kreosotöl oder auch höher siedende Öle u. a. verwendet, so daß die Hydrierung auch bei niedrigen Wasserstoffdrucken bis in den Bereich von 1 bar Wasserstoffdruck durchgeführt werden kann.

Verweilzeit und Wasserstoffdruck werden bei den erfindungsgemäßen Hydrierungen aufeinander abgestimmt. Das Hydrierprodukt kann in üblicher Weise aufgearbeitet werden, z. B. durch Destillation (6).

In einem weiteren Beispiel wird in Gegenwart von Anthracenöl gearbeitet, wobei das zu hydrierende Abfallmaterial, gegebenenfalls im Gemisch mit kohle- und/oder mineralischen Materialien zunächst unter Zusatz starker Säuren, z. B. von Fluorwasserstoff und/oder p-Toluolsulfonsäure bei etwa 370-420 °C gelöst wird und anschließend gegebenenfalls nach Abtrennen nicht gelöster Materialien unter Zusatz von Salzen wie $SbCl_5$, $SbF_5$, u. a. sowie HF bzw. HCl, die zur Bildung starker komplexer Säuren befähigt sind, bei 75-220 °C, bevorzugt bei 150-200 °C und 1-5 bar Wasserstoff, bevorzugt 1-2 bar Wasserstoff hydriert wird. In einer anschließenden Hydrierstufe können ungesättigte Produkte in gesättigte umgewandelt werden.

Auch beispielsweise unter Bedingungen der SRC-(Solvent Refined Coal) Kohlehydrierung lassen sich Abfälle gegebenenfalls im Gemisch mit Biomasse sowie gegebenenfalls im Gemisch mit kohle- und mineralischen Materialien, wie beispielsweise Erdölrückständen mit hohen Ausbeuten an destillierbaren Ölen umsetzen. Geeignete Bedingungen in der Auflösestufe sind 380-480 °C. In der Hydrierstufe arbeitet man im allgemeinen bei 350-450 °C und einem Druck von 110-250 bar, vorzugsweise von 120-220 bar, wobei die üblichen Hydrierkatalysatoren eingesetzt werden können.

Die Untersuchungen der Anmelderin haben ergeben, daß für die hydrierende Kohle- und Erdölrückstandsverarbeitung entwickelte Verfahren auch für die hydrierende Spaltung von Kohlenstoff enthaltenden, ganz unterschiedliche Materialien enthaltenden Abfallgemischen, insbesondere dem synthetischen Teil der Abfälle, ggfs. im Gemisch mit kohle- und mineralischen Materialien anwendbar sind, wenn auch im einzelnen ggfs. in abgewandelter Form, soweit diese unter die Ansprüche der vorliegenden Erfindung fallen.

Beispiele, die jedoch nicht limitierend sind, für solche Verfahren sind: das H-Oil Verfahren (HRI Inc. and Texaco Development Corp.), das Canmet Verfahren (Partec Lavalin Inc./Petro Canada), das LC-Fining Verfahren (Lummus Crest. Inc.), das Veba Kombikrack-Verfahren (VEBA), das VEBA LO Krackverfahren (VEBA), das RCD Unibon Verfahren (UOP Process Division Research Co./UOP, Co.), das Residfining Verfahren (Exxon Research and Engineering Co.), das Unicracking und Unicracking/HDS Verfahren (Union Oil of California), das HC Unibon Verfahren (UOP Process Division of UOP Inc.), das Isocracking Verfahren (Chevron Research Co.), das Heavy Oil Cracking Verfahren (Phillips Petroleum), das Dynacracking Verfahren (Hydrocarbon Research Inc.), das Linde-Hydrokonverter Verfahren u. a.

In den Fällen in denen es sich bei diesen Verfahren um Festbettkatalysator-Verfahren handelt, kann zumindest gelöster Abfall, wie z. B. in Kohleöl und Erdöl bzw. ihren Komponenten, erfindungsgemäß hydriertend behandelt werden.

Erfindungsgemäß können Abfallgemische auch in der Weise hydrierend verarbeitet werden, daß Gemische aus vegetabilischem und synthetischem Abfall, gegebenenfalls unter Zusatz von Biomasse in verschiedenen Stufen unter Bedingungen umgesetzt werden, bei denen einerseits im wesentlichen die hydrolytische und hydrierende Umsetzung vegetabilischen- bzw. Papieranteils und Biomasse-Anteils und andererseits die hydrierende Umsetzung des synthetischen organischen Abfalls erfolgt. Beide Stufen können auch in Gegenwart eines Wasserstoffdonor-Lösungsmittels durchgeführt werden.

So kann in der 1. Stufe eine hydrierende Behandlung ggfs. in Gegenwart von Hydrierkatalysatoren und einem Druck von 1 bar bis 150 bar, vorzugsweise 25-60 bar erfolgen, wobei vorzugsweise in

EP 0 182 309 B1

Gegenwart von Wasser und anderen protischen Lösungsmitteln wie beispielsweise Alkoholen gearbeitet wird.

Anschließend können die überwiegend aus dem vegetabilischen Anteil erhaltenden Öle durch Lösungsmittelextraktion abgetrennt werden, wonach der nicht hydrierend gespaltene Anteil in der 2. Stufe unter bereits geschilderten Bedingungen ebenfalls hydrierend gespalten werden kann.

Die stufenweise Verarbeitung kann auch in der Weise erfolgen, daß vegetabilische Anteile bzw. Papieranteile bzw. Biomasse in der ersten Stufe hydrolytisch gespalten worden, beispielsweise in Gegenwart von Alkalien oder Säuren, wobei diese Umsetzung ggfs. in Gegenwart von CO stattfinden kann und bevorzugt in Gegenwart von Wasser und/oder anderen protischen Lösungsmitteln wie beispielsweise von Alkoholen und in der 2. Stufe der synthetische bzw. überwiegend synthetische Anteil hydrierend umgesetzt wird.

Alternativ kann der Abfall und/oder die Biomasse in einen vegetabilischen Anteil und einen synthetischen Anteil getrennt werden und unter den geschilderten Bedingungen getrennt verarbeitet werden.

Auch in diesen Fällen kann sowohl mit als auch ohne Katalysatoren gearbeitet werden. Ggfs. kann vor der 2. Stufe getrocknet werden.

« Stufen » sind in der vorliegenden Erfindung so zu verstehen, daß eine bestimmte Stufe, wie beispielsweise die oben genannte 1. Stufe zum hydrolytischen Abbau des vegetabilischen Anteils, selbst wieder aus mehreren parallel oder hintereinander geschalteten Stufen bestehen kann.

Es folgen weitere Beispiele, wobei auch bei in den Tabellen 1-7 nicht angegebenen Versuchsbedingungen von 50-500 bar Druck, 200-600 °C und Verweilzeiten von 1 min. bis 8 Stunden gute Ergebnisse erhalten wurden: Die in Tabelle 1 zusammengefaßten Versuche wurden in Autoklaven bei 450 °C und 100 bar (kalt) mit Synthesegaswasserstoff durchgeführt. Als Anreiböl wurde eine Krackvakuumdestillat eingesetzt im Verhältnis zum Abfall von 3 : 7. Die Verweilzeit betrug 4 Stunden. Es wurde ohne Katalysator gearbeitet.

Tabelle 1

| Einsatz-produkt | Umsatz | CO-CO$_2$ | Kohlenwasserstoffe | | |
|---|---|---|---|---|---|
| | | | C$_1$-C$_4$ KW's Gew.% | Siedepkt. < 390°C Gew.% | Siedepkt. > 390°C Gew.% |
| Kunststoffabfälle[1] | 99,5 | 0,5-3 | 1-6 | 42-93 | 0,5-56,5 |
| Grüne Tonne[2] | 99,3 | 2 | 2 | 82 | 14 |
| Schaumstoff[3] | 98 | 19 | 10 | 52 | 19 |
| Teppichboden | 97 | 1 - 6 | 10-35 | 35-52 | 7-54 |
| Gemisch v. Polyethylen Polypropylen Polystyrol | 99,7 | 0,5 | 1 | 93 | 5,5 |
| Gemisch von Reifen Polyethylen Plexiglas | 98,5 | 3 | 4 | 58 | 35 |

[1] Gemisch von Polyethylen, Polypropylen, Polyacrylaten, Kautschuk, Reifen, Polystyrol
[2] Synthetische organische Müllbestandteile einschließlich PVC aus einer Tagesprobe einer Mülltrennanlage
[3] Polyurethan/Polystyrol

Durch Polystyrol erhöht sich der Anteil an Aromaten. Bei den eingesetzten Kunststoffabfallgemischen betrug der Aromatenanteil ca. 25 Gew.%.

7

Analoge Ergebnisse werden erhalten bei erhöhtem Wasserstoffdruck, wobei kürzere Verweilzeiten eingestellt werden können.

In Tabelle 2 sind die Ergebnisse der hydrierenden Behandlung des in einer Mülltrennanlage erhaltenen synthetischen Anteils mit einem Anteil von 15 Gew.% chlorhaltiger Polymerer in Abhängigkeit von der Hydrierdauer bei 450 °C zusammengefaßt. Der Druck lag bei 200 bar(kalt). Als Zumischkomponente wurde außer im letzten Versuch, ein gebrauchtes Maschinenöl eingesetzt im Verhältnis zum Abfall von 1 : 2,3. Es wurde ohne Katalysator gearbeitet.

Tabelle 2

| Reaktionszeit Stdn. | Umsatz in (%) KW's mit Sdpt. <390°C | $C_1$-$C_4$ KW's Gew.% | < 180°C Gew.% | 180 - 390°C Gew.% | > 390°C Gew.% |
|---|---|---|---|---|---|
| | | Kohlenwasserstoffe / Siedebereiche | | | |
| 2 | 59 | 1 | 24 | 34 | 41 |
| 4 | 81 | 2 | 34 | 45 | 19 |
| 4[1] | 86 | 21 | 47 | 18 | 14 |
| 4[2] | 89,5 | 23,5 | 47 | 14 | 10,5 |
| 6 | 97 | 21 | 56 | 20 | 3 |
| 6[3] | 99 | 23 | 65 | 11 | 1 |

[1] Nach 2 Stdn. wurde abgekühlt, zwischenentspannt und erneut 200 bar $H_2$ aufgepresst.
[2] Mit Bitumenzusatz im Verhältnis Abfall zu Bitumen 2 : 1.
[3] Mit « Eigenöl » (180-390°C).

Tabelle 2 zeigt, daß bei konstanter Temperatur, die Ausbeute an Kohlenwasserstoffen mit Siedepunkt < 180 °C von 4 Gew.% (2 Stunden) auf 65 Gew.% (6 Stunden) zunimmt, während der Anteil der hochsiedenden Fraktion mit Siedebereich > 390 °C von 21 Gew.% auf 1 Gew.% abnimmt. Wird die Fraktion mit Siedebereich 180-390 °C als « Eigenöl », im Gemisch mit Abfall-Feed eingesetzt, so wird auch das Eigenöl nahezu quantitativ zu niedrigsiedenden Kohlenwasserstoffen umgesetzt.

Durch eine nachgeschaltete hydrierende Raffination läßt sich der Halogengehalt in den Produkt-Fraktionen nahezu quantitativ (< 1 ppm) eliminieren. Das gesamte Kohlenwasserstoffprodukt kann auch als solches hydrierend raffiniert werden.

Beispielhaft wurde eine aus synthetischen Abfall aus einer grünen Tonne gewonnene, zwischen 180 bis 390 °C siedende Kohlenwasserstoff-Fraktion mit einem Gehalt von 2 400 ppm Chlor einer hydrierenden Raffination bei 50 bar Wasserstoffdruck und 270 °C unterworfen. Im erhaltenen Produkt war Chlor nicht mehr nachweisbar.

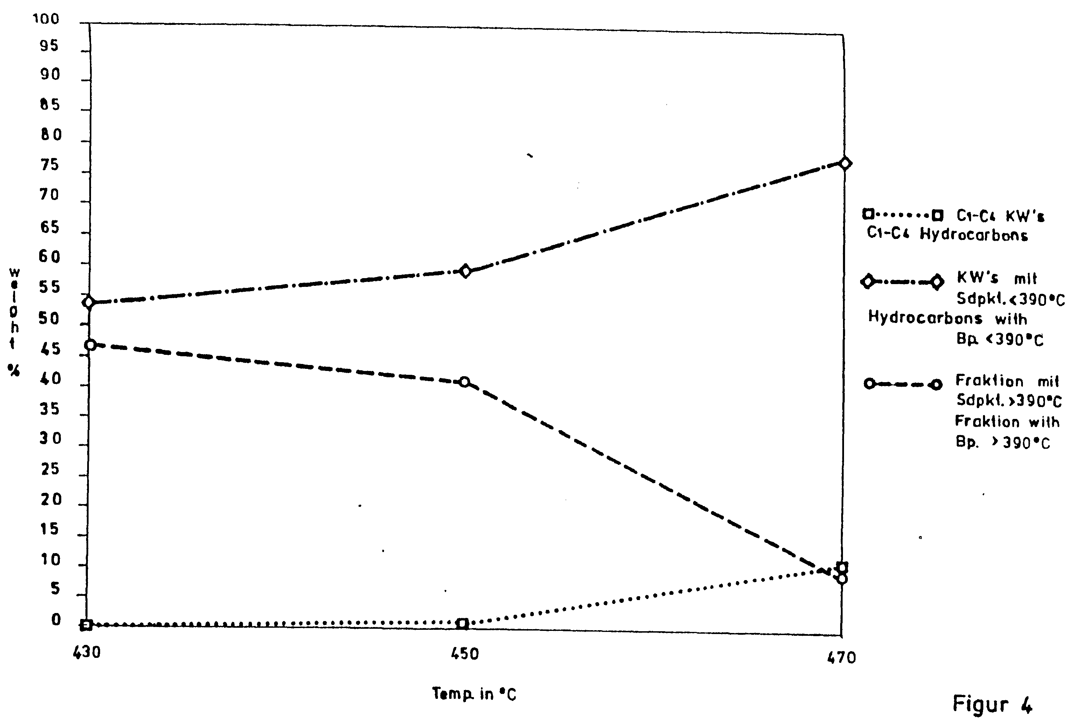

In Figur 4 ist die Abhängigkeit der Ausbeute an den einzelnen Fraktionen in Abhängigkeit von der Temperatur bei 2 Stunden Verweilzeit dargestellt.

Im wesentlichen ähnliche Ergebnisse werden erhalten, wenn synthetischer Abfall ohne Zusatz eines Anreiböls eingesetzt wird und wenn Erdölrückstandsöle gemeinsam mit dem Abfall eingesetzt werden.

Auch hier wird der Abfall nahezu quantitativ umgesetzt, wobei gleichzeitig eine hydrierende Spaltung des Erdölrückstands erfolgt. Gemische mit Braunkohle und Steinkohle sind ebenfalls mit sehr guten Ergebnissen hydrierend spaltbar. Dies gilt auch in Gegenwart von anderen mineralischen Ölen.

Tabelle 3 und 4 zeigen Ergebnisse, die bei der Hydrierung eines Gemisches synthetischer Müllbestandteile einschließlich PVC erhalten wurden, aus einer Tagesprobe einer Mülltrennanlage, das 10-50 Gew.% an vegetabilischem Anteil enthielt sowie eines Gemischs aus synthetischen Müll mit 20 bis 60 Gew.% Abfallpapier. Es wurde bei 450 °C einem Druck von 200 bar und einer Verweilzeit von 4 Stdn. gearbeitet ohne Katalysatoren. Es wurde ein Vakuumdestillat aus einer Kohlehydrierung im Verhältnis Abfall zu VD von 3 : 1 eingesetzt. Zusätzlich zu den angegebenen Produkten wurde in den Tabellen nicht erfaßtes Wasser gebildet.

Tabelle 3

| Einsatzprodukt Synthetischer Anteil zu vegetabil. Anteil(feucht)aus grüner Tonne | Umsatz | $CO/CO_2$ Gew.% | $C_1-C_4$ KW's Gew.% | Sdpkt. <390°C Gew.% | Sdpkt. >390°C Gew.% |
|---|---|---|---|---|---|
| 9 : 1 | 99,5 | 3 | 3 | 79 | 15 |
| 8 : 2 | 99,6 | 4 | 5 | 74 | 17 |
| 1 : 1 | 99,6 | 7 | 10 | 63 | 20 |
| 2 : 8 vegetab.Anteil getrocknet | 78 | 5 | 16 | 50 | 29 |

Tabelle 4

| Einsatzprodukt Synthetischer Anteil zu Abfallpapapieranteil(feucht) aus grüner Tonne | Umsatz | $CO/CO_2$ Gew.% | $C_1-C_4$ KW's Gew.% | Sdpkt. <390°C Gew.% | Sdpkt. >390°C Gew.% |
|---|---|---|---|---|---|
| 80 : 20 | 99,5 | 5 | 5 | 65 | 25 |
| 66 : 34 | 99,5 | 7 | 11 | 49 | 33 |
| 40 : 60 | 99,5 | 13 | 9 | 41 | 37 |

In Tabelle 5 sind Umsatz und Ausbeute in Abhängigkeit von Katalysatoren dargestellt.

Es wurde bei 450 °C, 200 bar Druck und 4 Stunden Verweilzeit gearbeitet. Als Zumischkomponente wurde ein gebrauchtes Spindelöl eingesetzt im Verhältnis Spindelöl zu Abfall von 1 : 2.

Als Abfall wurde der synthetisch organische Anteil einer Mülltrennanlage eingesetzt. Die Bedingungen wurden gewählt, um mit den vorherigen Tabellen vergleichen zu können. Ähnliche Ergebnisse werden jedoch auch bei Variation der Bedingungen erhalten.

Tabelle 5

| Katalysator | Umsatz zu KW's mit Sdpkt. < 390°C | Siedebereiche | | | |
|---|---|---|---|---|---|
| | | $C_1-C_4$ KW's Gew.% | <180°C Gew.% | 180-390°C Gew.% | >390°C Gew.% |
| - | 81,4 | 2 | 38 | 45 | 15 |
| Ni/Mo/$Al_2O_3$ | 88 | 1 | 41 | 46 | 12 |
| Ni/Mo/Aluminiumsilikat | 98 | 14 | 58 | 26 | 2 |
| Fe(II)acetylacetonat | 92 | 11 | 38 | 43 | 8 |
| NI(II)acetat | 92 | 9 | 33 | 50 | 8 |
| Herdofenkoks +5 Gew.%$FeSO_4$ | 90 | 6 | 53 | 31 | 10 |

Die Tabelle zeigt, daß durch Hydrierkatalysatoren wie Ni/Mo/Aluminiumsilikat ebenfalls sehr hohe Umsätze erzielt werden können, wobei gleichzeitig ein hoher Anteil an Fraktionen mit Siedebereich unter 390 °C erhalten wird. Durch Eisen- und Nickel-Katalysatoren läßt sich insbesondere ein hoher Anteil an Verbindungen des Siedebereichs 180-390 °C gewinnen, während sich mit Katalysatoren wie Herdofenkoks und $FeSO_4$ ein hoher Anteil an Verbindungen des Siedebereichs < 180 °C gewinnen läßt.

Durch Variation von Temperatur, Druck und Verweilzeit lassen sich die angegebenen Selektivitäten ebenfalls variieren.

In kontinuierlichen Versuchen wurden mit einer Verweilzeit von 2 Stunden bei 450 °C und einem Druck von 200 bar 2 kg/h synthetisch-organischer Abfall in einem Erdölrückstandsöl im Verhältnis 30 : 70 umgesetzt, wobei ohne Katalysator, mit Ni/Mo/Aluminiumsilikat und mit Herdofenkoks/$FeSO_4$ gearbeitet wurde. Hierbei konnten, wie Tabelle 6 zeigt, die in den Tabellen 2 und 5 erhaltenen Ergebnisse noch erheblich verbessert werden. Die Versuche wurden über jeweils 700 Stunden gefahren.

Tabelle 6

| Katalysator | Umsatz zu KW's mit Sdpkt. <390°C | Siedebereiche | | | |
|---|---|---|---|---|---|
| | | $C_1$-$C_4$ KW's Gew.% | <180°C Gew.% | 180-390°C Gew.% | >390°C Gew.% |
| - | 88 | 1,5 | 39,5 | 47 | 12 |
| Ni/Mo/Al.-silikat | 99 | 10 | 65 | 24 | 1 |
| Herdofenkoks +5 Gew.%$FeSO_4$ | 93 | 4 | 58 | 31 | 7 |

Ein ähnliches Ergebnis wurde erhalten mit einem gebrauchten Maschinenöl als Zusatz anstelle von Erdölrückstandsöl. Noch etwas bessere Ergebnisse wurden erhalten mit einem Zusatz aus 25 Gew.% Erdölrückstandsöl und 75 Gew.% Eigenöl (180-390 °C), wie Tabelle 7 zeigt.

Tabelle 7

| Katalysator | Umsatz zu KW's mit Sdpkt. <390°C | Siedebereiche | | | |
|---|---|---|---|---|---|
| | | $C_1$-$C_4$ KW's Gew.% | <180°C Gew.% | 180-390°C Gew.% | >390°C Gew.% |
| - | 89 | 2 | 38 | 49 | 11 |
| Ni/Mo/Al.-silikat | 99 | 7 | 68 | 24 | 1 |
| Herdofenkoks +5 Gew.%$FeSO_4$ | 95 | 3 | 62 | 30 | 5 |

Da Wasserstoff zunehmende Bedeutung gewinnt und bereits heute in zahlreichen Unternehmen erzeugt wird, sei es durch Synthesegaserzeugung, durch Elektrolyse oder Photoelektrolyse und zudem durch Pipelines über große Entfernungen transportiert werden kann, können an zahlreichen ausgewählten Orten vor allem in der Nähe von Ballungszentren gemäß vorliegender Erfindung Großanlagen errichtet werden, die ganze Regionen von Abfällen entsorgen können unter Vermeidung von Deponien insbesondere auch Sonderdeponien und unter Vermeidung von Abfallverbrennung, die wie oben beschrieben, zusätzliche ungelöste Probleme schafft.

Im Unterschied zu Müllverbrennungsanlagen, die eine hohe $CO_2$-Belastung mit sich bringen und Pyrolyseanlagen in denen große Mengen an Gasen erzeugt werden, werden bei der vorliegenden Erfindung wertvolle flüssige Produkte erzeugt, so daß ein Recycling von Konsumprodukten in hervorragender Weise gewährleistet wird.

Während, wie im Stand der Technik geschildert, die Fachwelt sich in aufwendiger anderer Richtung bemüht hat und trotz eines dringenden Bedürfnisses zu einer befriedigenden Beseitigung der Abfälle bisher nicht in der Lage war, wird durch die vorliegende Erfindung sprunghaft eine hervorragende Lösung aufgezeigt.

## Patentansprüche

1. Verfahren zur hydrierenden Aufarbeitung von Kohlenstoff enthaltenden Abfällen, wobei ein Verfahren zum hydrierenden Kracken von Abfallreifengummi in Gegenwart eines mit Schwefel synergistisch wirkenden Katalysators ausgenommen ist, der aus einer Eisenverbindung und einem Zusatz von Metallen aus der Gruppe Cr, Mo, W, Se und Te besteht, durch Umsetzung mit Wasserstoff und/oder Wasserstoff enthaltenden Gasen und/oder Wasserstoff übertragenden Verbindungen (Wasserstoff-Donor-Lösungsmittel), dadurch gekennzeichnet, daß Gemische Kohlenstoff enthaltender Abfälle synthetischen bzw. überwiegend synthetischen Ursprungs mit Wasserstoff und/oder Wasserstoff enthaltenden Gasen bei einer Temperatur von 200-600 °C, bevorzugt bei einer Temperatur von 200-540 °C, bei einem Druck von 30-500 bar, bevorzugt von 50-450 bar und einer Verweilzeit von 1 Minute bis 8 Stunden, bevorzugt von 15 Minuten bis 6 Stunden umgesetzt werden und bei Einsatz eines Wasserstoff-Donor-Lösungsmittels bei einer Temperatur von 75-500 °C, bevorzugt von 80-480 °C und einem Druck von 1-300 bar hydrierend umgesetzt werden.

2. Verfahren nach Anspruch 1, dadurch gekennzeichnet, daß in einer 1. Stufe mit oder ohne Wasserstoff-Donor-Lösungsmittel in Gegenwart protischer Lösungsmittel, insbesondere von Wasser umgesetzt wird, bei einem Druck von 1-150 bar und einer Temperatur von 75-500 °C.

3. Verfahren nach den Ansprüchen 1 und 2, dadurch gekennzeichnet, daß mit Anreibölen gearbeitet wird.

4. Verfahren nach den Ansprüchen 1-3, dadurch gekennzeichnet, daß die zu hydrierenden Abfälle im Gemisch mit Erdöl und/oder Erdölbestandteilen, insbesondere Erdölrückständen und/oder Kohle und/oder Kohlebestandteilen und/oder Ölschiefer und/oder Ölschieferkomponenten und/oder Ölsandextrakten und/oder Bitumen und/oder Asphalt und Asphaltenen umgesetzt werden.

5. Verfahren nach den Ansprüchen 1-4, dadurch gekennzeichnet, daß in Gegenwart von sogenannten Wegwerfkatalysatoren hydriert wird.

6. Verfahren nach den Ansprüchen 1-5, dadurch gekennzeichnet, daß Stäube und Aschen aus der Kohleverarbeitung, die ggfs. mit hydrieraktiven Metallen und/oder deren Verbindungen dotiert sind, als Katalysatoren eingesetzt werden.

7. Verfahren nach den Ansprüchen 1-6, dadurch gekennzeichnet, daß in Gegenwart von Herdofenkoks und/oder Winkler-Stäuben, z.B. HTW-Staub (Hoch-Temperatur-Winkler-Staub) und -aschen und-/oder HKV-Staub (Hoch-Temperatur-Kohle-Vergasung), die ggfs. mit hydrieraktiven Metallen .und/oder deren Verbindungen dotiert sind, als Katalysatoren gearbeitet wird.

8. Verfahren nach den Ansprüchen 1-7, dadurch gekennzeichnet, daß in Gegenwart Eisen enthaltender Katalysatoren, die ggfs. mit weiteren hydrieraktiven Metallen und/oder deren Verbindungen dotiert sind, gearbeitet wird.

9. Verfahren nach den Ansprüchen 1-8, dadurch gekennzeichnet, daß in Gegenwart von Ni und/oder Molybdän und/oder Wolfram und/oder Kobalt enthaltenden Katalysatoren, gegebenenfalls auf Trägern gearbeitet wird.

10. Verfahren nach den Ansprüchen 1-4, dadurch gekennzeichnet, daß in Abwesenheit von Katalysatoren gearbeitet wird.

11. Verfahren nach den Ansprüchen 1-10, dadurch gekennzeichnet, daß in Gegenwart von Eigenöl hydrierend umgesetzt wird.

12. Verfahren nach den Ansprüchen 1-11, dadurch gekennzeichnet, daß die zu hydrierenden, Kohlenstoff enthaltenden Abfälle zumindest teilweise gelöst und anschließend hydriert werden.

13. Verfahren nach den Ansprüchen 1-12, dadurch gekennzeichnet, daß der hydrierenden Behandlung eine im wesentlichen hydrolytische Stufe vorgeschaltet ist.

14. Verfahren nach den Ansprüchen 1-13, dadurch gekennzeichnet, daß die Produkte der hydrierenden Umsetzung zumindest teilweise einer hydrierenden Raffination unterworfen werden.

## Claims

1. Process for the hydrogenative reprocessing of carbon containing waste materials, with the exclusion of a process for hydrocracking of waste tires in the presence of a catalyst of an iron compound and an auxiliary catalyst of metal compounds of the group Cr, Mo, W, Se and Te, based on a synergistic catalyst action with sulfur, by treatment of the waste materials with hydrogen und/or hydrogen transferring solvents (hydrogen donor solvents), characterized in that mixtures of carbon containing waste materials of synthetic respectively predominantly synthetic origin are reacted with hydrogen and/or hydrogen containing gases at a temperature of 200-600 °C, preferably at a temperature of 200-540 °C, at a pressure of 30-500 bar, preferably of 50-450 bar and a residence time of 1 minute to 8 hours, preferably of 15 minutes to 6 hours and in the case of reaction with a hydrogen-donor-solvent at a temperature of 75-500 °C, preferably of 80-480 °C and a pressure of 1-300 bar.

2. Process according to claim 1, characterized in that in a first step with or without a hydrogen-donor-solvent the reaction takes place in the presence of a protic solvent, in particular of water, at a pressure of 1-150 bar and a temperature of 75-500 °C.

3. Process according to claims 1 and 2, characterized in that the reaction takes place in the presence of pasting oil(s).

4. Process according to claims 1 to 3, characterized in that the waste materials to be hydrogenated, are reacted in a mixture with crude oil and/or crude oil components, in particular with crude oil residual oils and/or with coal and/or coal components and/or oil shale and/or oil shale components and/or oil sand and/or oil sand components and/or bitumen and/or asphalt and/or asphaltenes.

5. Process according to claims 1 to 4, characterized in that the hydrogenation is carried out in the presence of once-through catalysts.

6. Process according to claims 1 to 5, characterized in that dusts and ashes resulting from coal conversions are used as catalysts, optionally doped with metals and/or metal compounds which are active as hydrogenation catalysts.

7. Process according to claims 1 to 6, characterized in that the hydrogenation is carried out in the presence of hearth furnace coke and/or Winkler dust and ashes, like HTW-dust (high temperature Winkler dust) and ashes and/or HKV-dusts and ashes (high temperature coal gasification), which optionally may be doped with metals and/or metal compounds which are active as hydrogenation catalysts.

8. Process according to claims 1 to 7, characterized in that the hydrogenation is carried out in the presence of iron containing catalysts, which may be doped with additional metals and/or their compounds which are active as hydrogenation catalysts.

9. Process according to claims 1 to 8, characterized in that the hydrogenation is carried out in the presence of Ni and/or Mo and/or W and/or Co containing catalysts, optionally on catalyst carriers.

10. Process according to claims 1-4, characterized in that the hydrogenation is carried out in the absence of catalysts.

11. Process according to claims 1-10, characterized in that the hydrogenation is carried out in the presence of oil of the hydrogenation unit.

12. Process according to claims 1-11, characterized in that the carbon containing waste materials to be hydrogenated, are at least in part dissolved and subsequently hydrogenated.

13. Process according to claims 1-12, characterized in that the hydrogenative treatment is preceeded by an essentially hydrolytic reaction.

14. Process according to claims 1-13, characterized in that the products of the hydrogenative treatment are at least in part exposed to a hydrogenative refining treatment.


**Revendications**

1. Procédé de transformation hydrogénante des déchets contenant du carbone, à l'exclusion d'un procédé hydrocraquage des pneus usés, en présence d'un catalyseur consistant d'un composé de fer et d'une addition des métaux du groupe Cr, Mo, W, Se et Te, étant synergique avec du soufre, par réaction avec de l'hydrogène et/ou avec des gaz contenant de l'hydrogène et/ou avec des composés transmettant de l'hydrogène, caractérisé en ce que les mélanges de déchets d'origine synthétique respectivement prépondérant d'origine synthétique contenant du carbone, sont soumis à de l'hydrogène et/ou à des gaz contenant de l'hydrogène à des températures de 200 à 600 °C, de préférence de 200-540 °C, sous des pressions de 30 à 500 bars, de préférence de 50 à 450 bars et un temps de séjour d'une minute à 8 heures, de préférence de 15 minutes à 6 heures et dans le cas de soumission à des composés transmettant de l'hydrogène, à des températures de 75 à 500 °C, de préférence de 80 à 480 °C et sous des pressions de 1 à 300 bars.

2. Procédé selon la revendication 1, caractérisé en ce que les mélanges de déchets sont transformés dans une première étape en présence d'un solvant protique, de préférence en présence de l'eau à des températures de 75 à 500 °C et sous des pressions de 1 à 150 bars, en présence des solvants transmettant de l'hydrogène ou en absence des solvants transmettant de l'hydrogène.

3. Procédé selon les revendications 1 et 2, caractérisé en ce que l'on travaille avec des huiles de broyage.

4. Procédé selon les revendications 1 à 3, caractérisé en ce que les déchets à hydrogéner sont hydrogénés en mélange avec du pétrole et/ou avec des constituants de pétrole de préférence avec des résidus à haut point d'ébullition de pétrole et/ou avec du charbon et/ou avec des constituants de charbon et/ou avec du schiste bitumineux et/ou avec des constituants de schiste bitumineux et/ou avec des extraits du sable pétrolifère et/ou avec du bitume et/ou avec de l'asphalte et/ou avec des asphaltènes.

5. Procédé selon les revendications 1 à 4, caractérisé en ce que l'on hydrogène en présence des catalyseurs non retour.

6. Procédé selon les revendications 1 à 5, caractérisé en ce que l'on hydrogène en présence des poussières et des cendres à l'origine de traitement de charbon, qui sont le cas échéant, dopés avec des métaux actifs dans des hydrogénations et/ou avec des composés de ces métaux.

7. Procédé selon les revendications 1 à 6, caractérisé en ce que l'on hydrogène en présence du coke de four à sole et/ou de poussière Winkler, par exemple de poussière et de cendre HTW (Hoch-Temperatur-Winkler-Staub) et/ou de poussière HKV (Hoch-Temperatur-Kohle-Vergasung) qui sont le cas échéant dopés avec des métaux actifs dans des hydrogénations et/ou avec des composés de ces métaux.

8. Procédé selon les revendications 1 à 7, caractérisé en ce que l'on hydrogène en présence des catalyseurs contenant du fer, qui sont le cas échéant, dopés avec d'autres métaux actifs dans des hydrogénations et/ou avec des composés de ces métaux.

9. Procédé selon les revendications 1 à 8, caractérisé en ce que l'on hydrogène en présence des catalyseurs qui contiennent de Ni et/ou de Mo et/ou de W et/ou de Co, le cas échant distribués sur un support.

10. Procédé selon les revendications 1 à 4, caractérisé en ce que l'on hydrogène en absence des catalyseurs.

11. Procédé selon les revendications 1 à 10, caractérisé en ce que l'on hydrogène en présence d'une huile provenant du procédé.

12. Procédé selon les revendications 1 à 11, caractérisé en ce que les déchets à hydrogéner contenant du carbone, sont dissous au moins partiellement et hydrogénés après.

13. Procédé selon les revendications 1 à 12, caractérisé en ce que un traitement hydrolytique précède l'hydrogénation.

14. Procédé selon les revendications 1 à 13, caractérisé en ce que les produits de l'hydrogénation sont soumis au moins partiellement à un raffinage hydrogénant.

Figur 1

Figur 2

Figur 3

EP 0 182 309 B1

Figur 4